# EUROPEAN PATENT APPLICATION

(11) **EP 1 619 022 A1**
(43) Date of publication of application: **25.01.2006**
(21) Application number: 05005641.5
(22) Date of filing: 15.03.2005
(51) Int. Cl.: B32B 37/00, B44C 1/17

(54) **Process of manufacturuîng a film that can be used to apply varnish and colour onto an object**

(30) Priority: 23.07.2004 WO PCT/US20/04023682; 22.02.2005 WO PCT/US20/05005522
(71) Applicant: DeMaxz Deutschland GmbH, 20354 Hamburg (DE)
(72) Inventor: Zaher Maximilian DeMaxZ Technologies AG, 6300 Zug (CH)
(74) Representative: von Hellfeld, Axel

(57) **Abstract**

A process of manufacturing a film that can be used to apply varnish and colour onto an object to be decorated comprises the following steps:
- applying a layer (14) of colour onto a first film (10), said first film (10) compris ing release properties,
- applying a layer of varnish onto said layer of colour on said first film,
- partially curing said layer of varnish,
- transferring by release said layers of varnish and colour from said first film onto a second film comprising release properties, wherein said second film is more flexible than said first film, and
- further curing the transferred layer of varnish on said second film.

## Description

The invention is concerned with a process of manufacturing a film that can be used to apply colour and varnish onto an object to be decorated.

The object to be decorated may e.g. be made from wood or a wood-like material, or the object may be made from plastics or the like. Also objects made of metal can be covered with colour and varnish by means of a film according to the present invention. Furthermore, objects made of glass or ceramic material can be decorated with colour and varnish by means of a film according to the present invention.

Films comprising so-called release properties are well known in the prior art, see e.g. EP 1 053 793 A1 and EP 0 573 676 B1. The prior art knows both papers and films made of a resin the surfaces of which are prepared such that the film comprises release properties. If layers of colour or varnish are applied to such a film comprising release properties, the layers can be transferred onto a object to be decorated wherein the layers of varnish or colour a peeled off from the film.

The prior art according to EP 0 573 676 B1 discloses a process of decorating an object wherein a layer of varnish is applied onto a film comprising release properties. That layer of varnish is partially cured. A layer of colour is applied onto the partially cured varnish layer and a second layer of varnish is applied onto the colour layer. Said second layer of varnish is also partially cured. Thereafter, said layers of varnish and colour, respectively, are transferred onto the object to be decorated (the "substrate"). After said transfer by release, the first and second varnish layers are completely cured. The "curing" is also called "cross linking".

EP 1 053 793 A1 teaches the application of varnish and colour onto an object by means of a release film, wherein a glue is applied on top of the varnish layers and colour layers of the release film. When transferring said layers onto the object to be decorated, the glue is in direct contact with said object.

The prior art also knows a process of manufacturing a film that can be used to apply colour and varnish onto an object to be decorated wherein a first film comprising release properties is printed with a colour layer and, thereafter, that colour layer is transferred by release onto another film comprising release properties. Said other film is more flexible than said first film.

It is an object of the present invention to provide a method of manufacturing a film that can be used to apply colour and varnish onto an object to be decorated, wherein the colour and varnish comprise very good cohesion properties on the decorated object. To this end, the present invention teaches a process of manufacturing a film that can be used to apply varnish and colour onto an object, said process comprising the steps of:
- applying a layer of colour onto a first film, said first film comprising release properties,
- applying a layer of varnish onto said layer of colour on said first film,
- partially curing said layer of varnish,
- transferring by release said layers of varnish and colour from said first film onto a second film comprising release properties, wherein said second film is more flexible than said first film, and
- further curing the transferred layer of varnish on said second film.

Alternatively, the present invention teaches a process of manufacturing a film that can be used to apply colour and varnish onto an object, said process comprising the steps of
- applying a layer of varnish onto a first film, said first film comprising release properties,
- applying a layer of colour onto said layer of varnish on said first film,
- partially curing said layer of varnish,
- transferring by release said layers of colour and varnish from said first film onto a second film comprising release properties, wherein said second film is more flexible than said first film, and
- further curing the transferred layer of varnish on said second film.

According to a preferred embodiment of the invention, said first film is made of polypropylene. Polypropylene is relatively stiff, as compared to other films known in the prior art as having release properties. On the other hand, a polypropylene film can be printed with a colour decoration in very good quality. If, in particular, three-dimensional objects are to be decorated, the relative stiffness (non flexibility) of the polypropylene film causes problems. Therefore, according to the present invention, the colour layer and the varnish layer applied onto the colour layer or underlying the colour layer are transferred, via release technique, onto another film comprising release properties, wherein said other film is relatively more flexible than said polypropylene film such that the colour layer and the varnish layer can be transferred from said more flexible film with high quality onto a three-dimensional object, including the edges or recesses in said object.

Preferable materials for said second, more flexible film are polyolefines, polyethylens, PVC, polyvenylalcohol.

Most preferable, the steps of the processes according to the present invention are performed in one and the same apparatus without time delay in between the steps. In particular, the step of transferring by release the layers of varnish and colour from said first film onto said second film are performed directly, with minimum time delay, after said partial curing of the layer of varnish.

Said partial curing is preferably performed by UV (Ultra Violet) radiation.

The same applies to said further curing of the transferred varnish layer. Said further curing is preferably a complete curing, i.e. a complete cross-linking of the varnish.

The colour most suitable for the present invention is selected as a UV-resistant dispersion colour. Preferably, 10 g (wet) are applied per m² (3 g dry).

Also sublimable dispersion colours can be used for said colour layer.

The varnish to be used is known in the prior art, e.g. a varnish based on alkyl-urethane-resin.

The product obtained in accordance with the process of the present invention is a film that can be used to apply colour and varnish onto an object to be decorated. The product is a film which can be manufactured and sold. It can be used by the customer e.g. in an apparatus using a membrane by which the film is pressed against the three-dimensional object to be decorated, as disclosed in EP 0 282 859 B1.

Also, the film manufactured in accordance with the present invention can be used in an injection moulding machine.

In the following, two embodiments of the present invention are described with regard to the drawings.

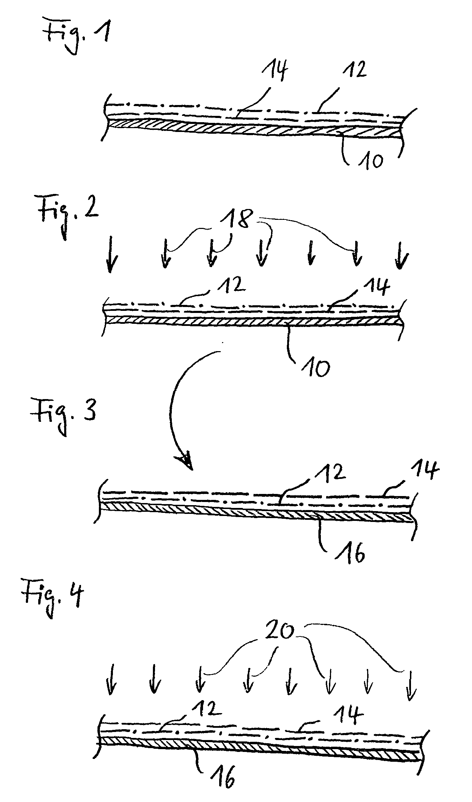

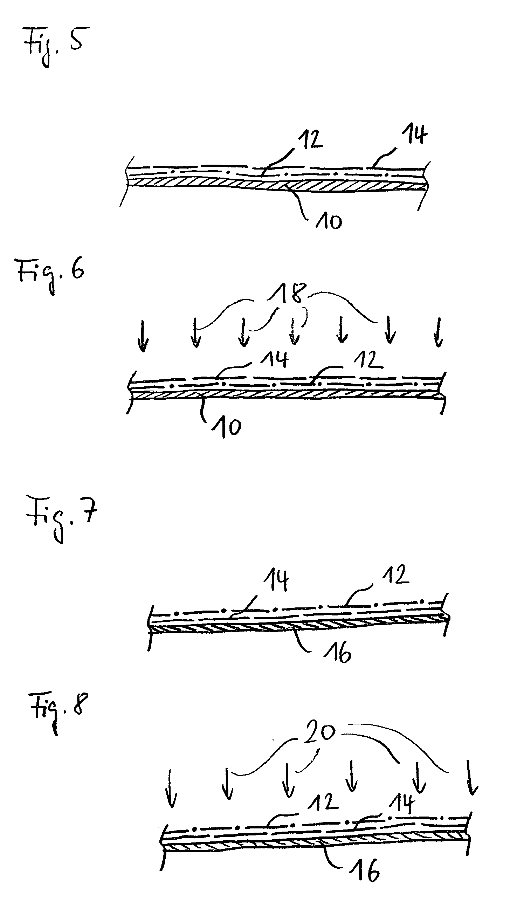

Figures 1 to 4 illustrate a first embodiment of a process of manufacturing a film that can be used to apply colour and varnish onto an object and figures 5 to 8 illustrate another embodiment of such a process.

According to Figure 1 a first film 10 of polypropylene is printed with a layer 14 which comprises a colour decoration. Said printing process as such is known in the art.

Thereafter, a layer 12 of a varnish is applied onto said layer 14 of colour. These two steps result in the product shown in Figure 1.

Thereafter, UV-radiation 18 indicated by arrows in Figure 2 is applied onto said film 10 carrying the layers of colour (14) and varnish (12). The intensity of the UV-radiation is controlled such that the varnish is not completely cured (cross-linked) but only partially, i.e. the varnish is still relatively soft. The degree of remaining softness of the varnish can be adjusted by the amount of UV-radiation and depends on the particular requirements which the final product film must fulfil which, on the other hand, depend on the dimensions and shape of the object eventually to be decorated. For example, the partial curing can be obtained by a radiation of 80 watt/cm².

After said partial curing of the varnish layer 12, the layers of varnish and colour are immediately, preferably without any time delay, transferred by release-technique onto another, second film 16 which comprises also release properties. The result of that transfer is shown in Figure 3, i.e. the layer 12 of varnish is in direct contact with the film 16 whereas the colour layer is on top of the varnish layer.

After said transfer, the layer of varnish is completely cured by means of UV-radiation 20 as indicated in Figure 4. The complete curing (cross-linking) may be obtained e.g. by applying 120 watt/cm². The transfer from the first to the second film can be eased by applying a pressure of 1 to 2 bar and an elevated temperature of 120 to 180°C.

Thereafter, the film 16 comprising the colour layer 14 and the completely cured varnish layer 12 can be used for decorating a product. That decoration is performed in accordance with the prior art, i.e. the layers of varnish and colour are transferred by release onto the object, e.g. in accordance with EP 0 573 676 B1 (wherein said object is called a "substrate"). In accordance with the present invention, however, the complete curing, i.e. the complete cross-linking is not performed on the decorated object, i.e. the object carrying the colour layer and varnish layer, rather, according to the present invention, the complete curing is performed on the film 16 comprising the release properties. Thereafter the decoration is transferred from that film onto the object.

Figures 5 to 8 show another embodiment of the present invention in which the layers comprise the same reference numerals as in Figures 1 to 4.

Different from Figures 1 to 4, Figures 5 to 8 illustrate a process wherein the layer 12 of varnish is applied first onto the polypropylene film 10. Thereafter, the layer 14 of colour is applied onto the layer 12 of varnish. This results in the product shown in Figure 5.

Thereafter, according to Figure 6, UV-radiation 18 is applied onto the layer of varnish such that it is partially cured, similar to the embodiment shown in Figure 2. After partial curing said varnish layer 14, both the colour layer 12 and the varnish layer 14 are transferred by release technique onto another film 16 comprising release properties such that the varnish layer 12 is covering the colour layer 14. Complete curing by UV-radiation 20 is illustrated in Figure 8. The final product illustrated in Figure 8 is a film 16 ready for decorating an object, as described above in more detail in connection with the embodiment shown in Figures 1 to 4.

The embodiments illustrated in Figures 1 to 8 can be modified such that more than one colour layer is applied and more than one varnish layer is applied. For example, in the steps illustrated in Figures 1 and 2 as well as Figures 5 and 6, respectively, more than one varnish layer and/or more than one colour layer can be applied onto the film 10. Important is that, in accordance with the invention, the at least one varnish layer is partially cured on the polypropylene film before it is transferred to the more flexible second film 16 illustrated in Figure 3, 4 and 7, 8, respectively.

## Claims

1. Process of manufacturing a film that can be used to apply varnish and colour onto on object, said process comprising the steps of:
- applying a layer (14) of colour onto a first film (10), said first film (10) comprising release properties,
- applying a layer (12) of varnish onto said layer (14) of colour on said first film (10),
- partially curing said layer (12) of varnish,
- transferring by release said layers (12, 14) of varnish and colour from said first film (10) onto a second film (16) comprising release properties wherein said second film (16) is more flexible than said first film (10), and
- further curing the transferred layer (12) of varnish on said second film (16).

2. Process of manufacturing a film that can be used to apply colour and varnish onto an object, said process comprising the steps of
- applying a layer (12) of varnish onto a first film (10), said first film (10) comprising release properties,
- applying a layer (14) of colour onto said layer (12) of varnish on said first film (10),
- partially curing said layer (12) of varnish,
- transferring by release said layers (14, 12) of colour and varnish from said first film (10) onto a second film (16) comprising release proper ties, wherein said second film (16) is more flexible than said first film (10), and
- further curing the transferred layer (12) of varnish on said second film (16).

3. Process according to one of the claims 1 or 2, wherein said first film (10) is made of polypropylene.

4. A process according to one of the claims 1 or 2, wherein said second film is made of polyolefin, polyethylene, or PVC.

5. Process according to one of the claims 1 or 2, wherein said partial curing is performed by UV-radiation.

6. Process according to one of the claims 1 or 2, wherein said further curing is performed by UV-radiation.
